# EUROPEAN PATENT SPECIFICATION

(11) **EP 1 149 005 B1**
(45) Date of publication and mention of the grant of the patent: **16.03.2005**
(21) Application number: 99968467.3
(22) Date of filing: 08.12.1999
(51) Int. Cl.: B60R 21/16

(54) **SIDE AIRBAG SYSTEM**
SEITENAIRBAGSYSTEM
SYSTEME DE COUSSIN GONFLABLE DE SECURTIE LATERAL

(30) Priority: 05.02.1999 US 245247
(43) Date of publication of application: 31.10.2001
(73) Proprietor: Key Safety Systems, Inc., Sterling Heights, Michigan 48314 (US)
(72) Inventor: WIPASURAMONTON, Pongdet, P., Rochester, MI 48307 (US); TOBIAN, Robert, New Baltimore, MI 48047 (US); DOMINISSINI, David, L., Allen Park, MI 48101 (US); CHEUNG, Bonnie, Y., Auburn Hills, MI 48236 (US)
(74) Representative: Gislon, Gabriele
(86) International application number: PCT/US1999/029019
(87) International publication number: WO 2000/046076

(56) References cited:
- EP-A- 0 847 904
- WO-A-99/10207
- FR-A- 2 753 665
- US-A- 5 372 381
- US-A- 5 845 935

## Description

The invention generally relates to airbag systems, and more particularly to airbag systems that protect a vehicle occupant during a side impact vehicle crash.

A number of inventions dealing with side impact airbag systems have been proposed. Each of these systems comprises an inflator and airbag. The airbag is installed in a compact folded or rolled condition. Upon sensing the occurrence of a side impact crash via various sensors, such as a crush sensor or accelerometer, a control signal is generated to activate the inflator, thereby producing or releasing inflation gas. This inflation gas causes the airbag to inflate. Ideally, the side impact airbag is positioned between the side of the vehicle occupant and an adjacent side of the vehicle to protect the vehicle occupant. In addition, during the operation of the vehicle many vehicle occupants, especially small children, may be positioned in an out-of-normal-seating position that has been referred to as out-of-position ("OOP"). As an example, one such out-of-position seating orientation might include a child resting within the corner formed by the outer edge of the seat and the adjacent side of the vehicle. The inflating side impact airbag must not adversely react with this out-of-position vehicle occupant.

FR 2753665 discloses a side airbag system comprising an inflatable cushion provided with a first and a second chamber, partially separated by a separation element. The separation element is such that, during operation of the airbag system, deployment of the first chamber is achieved before the second chamber receives the inflation gas. This permits to have a rapid partial inflation of the cushion so to provide a first absorption of the impact energy.

Problems of prior art systems are solved by the present invention which comprises a side airbag for protecting a vehicle occupant during a crash according to appended claim 1.
FIG. 1 is a side view of a side impact airbag incorporating the features of the present invention.
FIG. 2 is a plan view of the main panel of the airbag of FIG. 1.
FIG. 3 shows a cushion separator panel.
FIG. 4 shows a tube panel.
FIG. 5 shows a tube reinforcement panel.
FIG. 6 shows a partially constructed airbag.
FIG. 7 shows a cross-sectional view through section 7-7 of FIG. 1.
FIG. 8 shows a partially inflated airbag deploying from the vehicle seat.
FIG. 9 shows an alternate embodiment of the invention.
FIGS. 10 and 11 show a further alternate embodiment of the invention.

### Detailed Description of the Invention

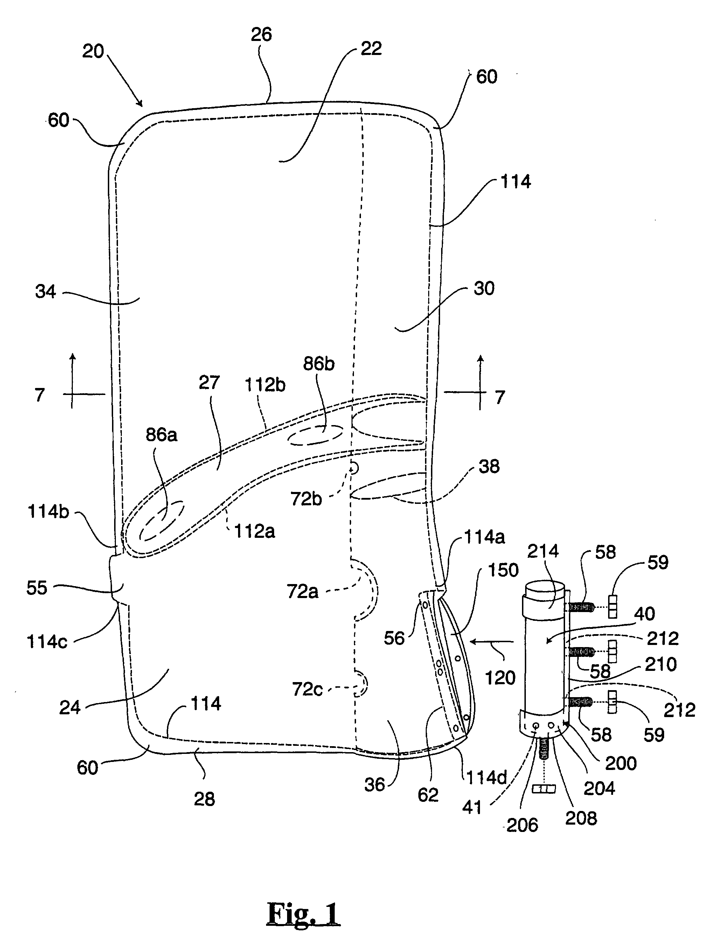

FIG. 1 is a plan view of a multi-chambered airbag 20 having an upper or head chamber 22, and a lower or thorax chamber 24. The two chambers 22, 24 are separated by a separator panel 27. The airbag 20 includes a third or rear chamber 30 that generally extends substantially from the top 26 to the bottom 28 of the airbag forming a tube 36. The combined head and thorax chambers are also referred to as a cushion or cushion portion 34 of the airbag. An inflator 40 is positioned within the lower portion of the tube. An additional, optional panel 38 is sewn to the lower part of the tube 31 and functions as a heat shield.

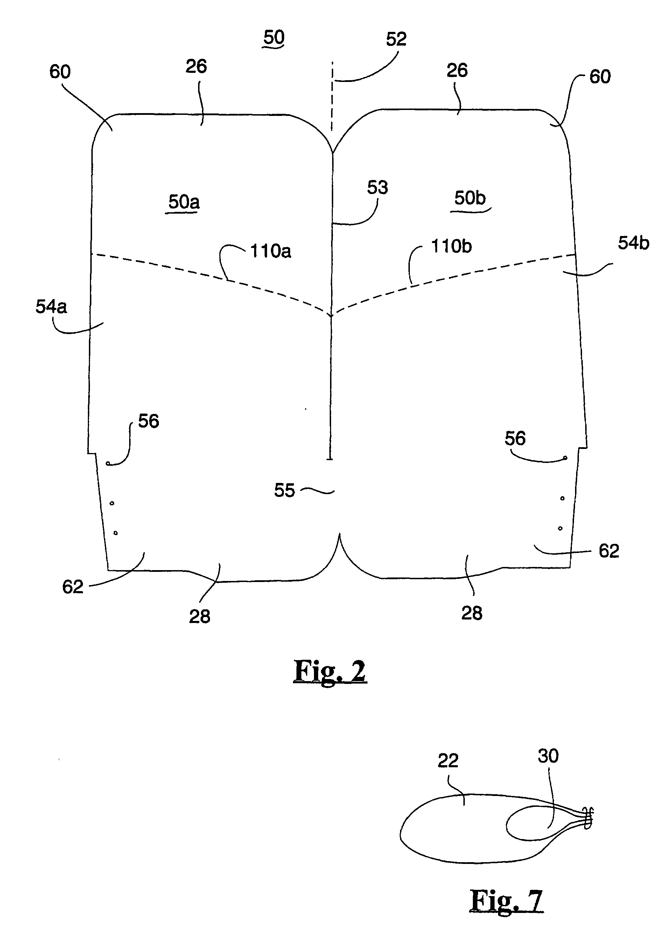

FIG. 2 shows the features of a main panel 50 that forms the cushion 34. The main panel includes side panel portions 50a, 50b that are generally symmetrical about a centerline 52. While two separate side panels can be used to form the airbag, the main panel 50 of the present invention a large slit 53 therein that partially extends down the centerline and separates the main panel into the panel portions 50a and 50b. The two panel portions are joined at a shared or common section 55 of the main panel. Each side panel portion 50a, 50b includes a top 26 and a bottom 28. The main panel 50a includes an outer side 54a, while panel side 50b includes an outer side 54b. Each of the panel sides 50a, 50b has a plurality of openings 56 therethrough which, in the preferred embodiment, are placed about corresponding studs 58 of the inflator 40 (see FIG. 1). As can be seen, these stud openings 56 are located in the lower outside corners 62 of each of the panel portions 50a and 50b respectively. These corners are generally squared off, while the other corners 60 of the panels 50a, 50b are curved (see FIG. 2).

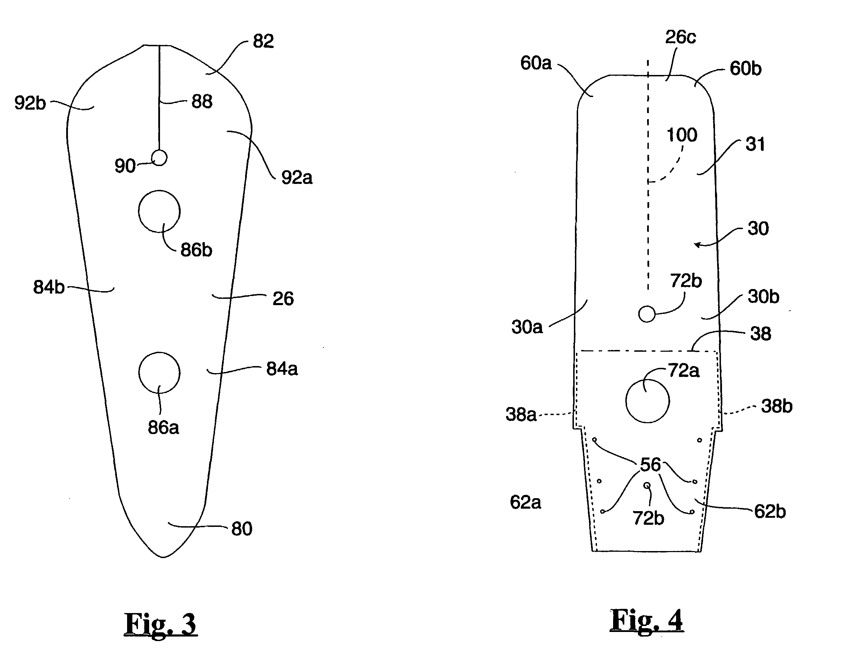

FIG. 4 is a plan view of the tube panel 31 laid flat about its centerline 100. The panel includes sides 30a, 30b, a top 26c and top, curved corners 60a, 60b (similar in shape to top corners 60). The lower sides 62a, 62b of the tube 30 are shaped to conform to the shape of the lower outer corners 62 of the main panel 50. The tube panel 31 additionally includes a plurality of mounting holes 56 similar in number and location to those holes in the main panel 50. Additionally, the tube includes a plurality of vent holes 72a - 72c which are used to communicate inflation gas to the lower portion of the cushion 34. As shown in FIGS. 1 and 4, the tube panel includes a large central vent 72a, a smaller, upper vent 72b and a lower vent 72c. The sides of these vents or vent openings are 76 mm, 25 mm and 10 mm respectively.

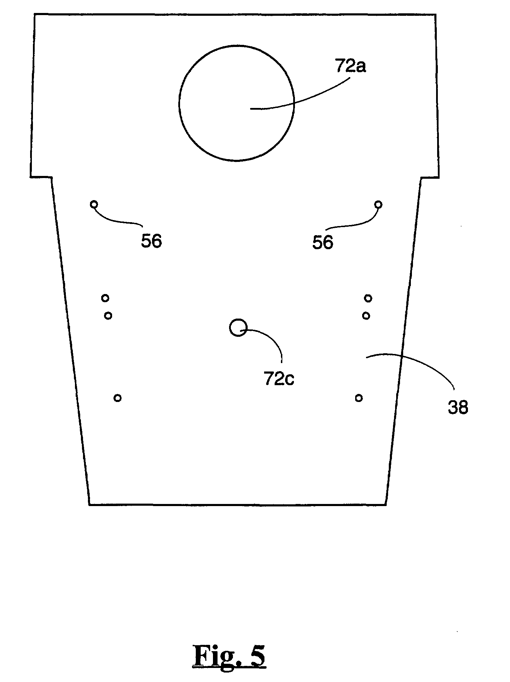

FIG. 5 is a plan view of the additional panel 38. This panel is identical in shape to the lower portion of the tube panel 31 and includes vent holes 72a, 72c and a plurality of stud openings or holes 56. During assembly, the additional panel 38 is placed upon the lower portion of the tube panel 31. This orientation is shown in FIG. 4 with the additional panel 38 shown in phantom line. The additional panel 38 is sewn to the tube panel along peripheral seams 38a, 38b.

As mentioned above, the airbag 20 includes a separator panel 27 that is shown in isolation in FIG. 3. The reinforcement panel 26 is oblong in shape having a narrow, curved forward end 80, a wider and larger curved rear end 82 and sides 84a, 84b. The separator panel has two vent holes 86a, 86b therein. The end 82 is separated using a slit 88 that terminates at a stress-relieving circle 90. The slit 88 separates the end of the separator panel into wings 92a, 92b.

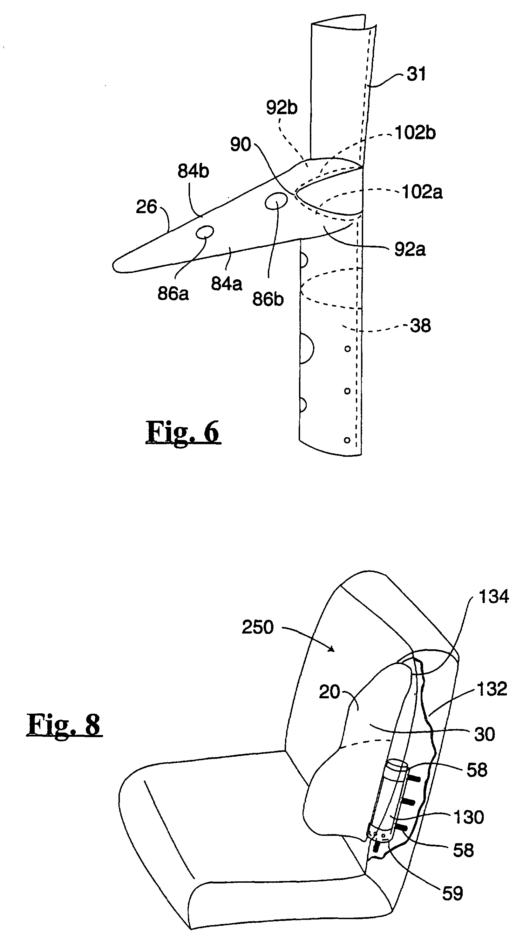

During assembly the separator panel 27 is secured to the tube panel 31. The separator panel is positioned relative to the tube panel with the opening 90 located on the centerline 100 of the tube panel 31. Thereafter, the wing 92a is sewn to the tube panel 31 along a line of stitches 102a. Similarly, the wing 92b is sewn to the other half of the tube panel 31 along a line of stitches 102b. FIG. 6 shows the separator panel 27 secured to the tube panel 31. The heat shield panel 38 is now also secured to the lower portion of the tube panel as shown in FIG. 6.

The separator panel 27 and the tube panel 31 are now secured to the main panel 50. This is achieved, for example, by aligning the side 84b of the separator panel in its desired orientation (relative to the main panel 50) shown by dotted line 110 (see FIG. 2). Thereafter, the side 84b of the separator panel is sewn to the side 50b of the main panel 50 along a seam 112b. Subsequently, the side 84a is positioned next to the side 50a of the main panel along its desired orientation (shown by dotted line 110a) and the side 84a of the separator panel 27 is sewn to the side panel 50a along a seam 112a. Reference is again made to FIG. 1 which shows the seams 112a, 112b used to fasten the separator panel 27 to the main panel 50. Thereafter, the main panel 52 is folded about its centerline 52 and the tube panel is folded about its centerline 100. This operation overlays and aligns the sides 30a, 30b of the tube panel with the sides 50a, 50b of the main panel. This alignment generally achieves the configuration shown in FIG. 1. Thereafter, the main panel 50 and the tube panel 31 are sewn together along a peripheral seam 114 starting at point 114a and terminating at point 114b just above the connecting or common portion 55 which links the panel portion or sides 50a and 50b. The peripheral seam continues on the lower end of portion 55 at point 114c and terminates at point 114d near the mounting holes 56. As can be seen, the completed airbag includes the above-mentioned upper chamber 22 and lower chamber 24 separated by the separator panel 27 and tube 30 extends from the top 26 to the bottom 28 of the airbag 20. Since the seam 114 does not extend across that portion of the bag 20 near the mounting holes 56 a doorway or opening 150 is provided through which the inflator 40 is inserted onto the lower end of the tube and main panel. In the illustrated embodiment the tube is closed at its top by a seam 114. The inflator 40 is positioned within the opening 150 formed by the opposed lower corners 62 of the main panel (tube and panel 38). In FIG. 1 the arrow 120 indicates the line of movement of the inflator within the opening 150 of the airbag. Thereafter, one set of mounting openings 56 at one of the lower corners 62 is fitted about a corresponding stud 58. Thereafter, the opposite corner 62 of the lower portion of side 50b with the other openings 56 is moved over the lower portion of the side 50a permitting the mounting studs 58 enter therein to achieve an overlapping relationship. Thereafter, the lower end 62 of each of the sides 50a, 50b, proximate the opening 150 may be held in place, on the nflator 40, by securing a threaded fastener such as nut 59 about each of the threaded studs 58. The tube panel 31 (and the optional panel 38) can be secured to the main panel in a number of ways. Rather than using a single sewn seam 114 respective sides of the tube panel can be first secured to a corresponding side of the main panel. Thereafter, these common sides can be joined together to achieve the desired orientation.

The inflator 40 can be first secured to a mounting retainer 200 which includes at one end an open sided cradle 204 with an opening 206 in an end wall end 208. The mounting retainer includes a thin support bar 210 extending from and integrally formed as part of the cradle 204. The support bar has a plurality of mounting openings 212 through which the mounting studs extend.

The inflator 40 may comprise a thin, hollow, cylindrical tube having at one end at least one gas exit port 41. As is known in the art, inflators can be manufactured using a chemical propellant which, when heated, produces inflation gas or, part of the inflator can be fashioned as a pressure vessel in which an inert gas is stored under pressure. This gas is subsequently heated causing one or more burst disks to open communicating the inflation gas to at least one exit port situated at the lower extreme of the inflator. The inflator may have the mounting studs 58 extend from the body of the inflator. The inflator is installed in the retainer 200. The inflator 40 includes a threaded stud 45 that is received within the opening 206 of the cradle 204 and secured therein by a nut 47. The opposite end of the inflator may be secured to the bar 210 by a circular strap 214.

FIG. 8 shows the airbag 20 in a partially inflated condition as it deploys from a vehicle seat 250. The mounting studs 58 of the inflator are secured to a frame 130 of the seat by fasteners 59. Prior to activation of the inflator 40, the airbag is folded or rolled into a compact configuration about the inflator within the seat back and covered by the foam and exterior covering material of the seat. The inflator may be secured directly to the mounting frame 130 of the vehicle seat 132 or installed within a housing such as retainer 200. The airbag is situated behind an outboard seam 134 of the seat 250 such that upon inflation of the airbag, the inflating airbag 20 bursts through the seam 134. As the airbag continues to inflate the airbag is positioned between the side of the vehicle occupant and the adjacent side of the vehicle.

In the present invention, inflation gas is supplied first to the tube 30 causing the tube to completely inflate prior to the inflation of the lower chamber 24 or upper chamber 22. As inflation gas is supplied to the tube, the tube causes the airbag to unfold and the tube will be positioned generally in an upright orientation as shown in FIG. 8 to properly orient the airbag behind the outboard shoulder of the vehicle occupant. Inflation gas is simultaneously supplied to the lower chamber 24 via the flow orifices 72a-72c causing the lower chamber 24 to extend outwardly from the upright tube 30 albeit at a lower rate regulated by the size of the orifices 72a - 72c. Inflation gas enters the upper chamber 22 through the flow openings 86a, 86b in the separator panel 27.

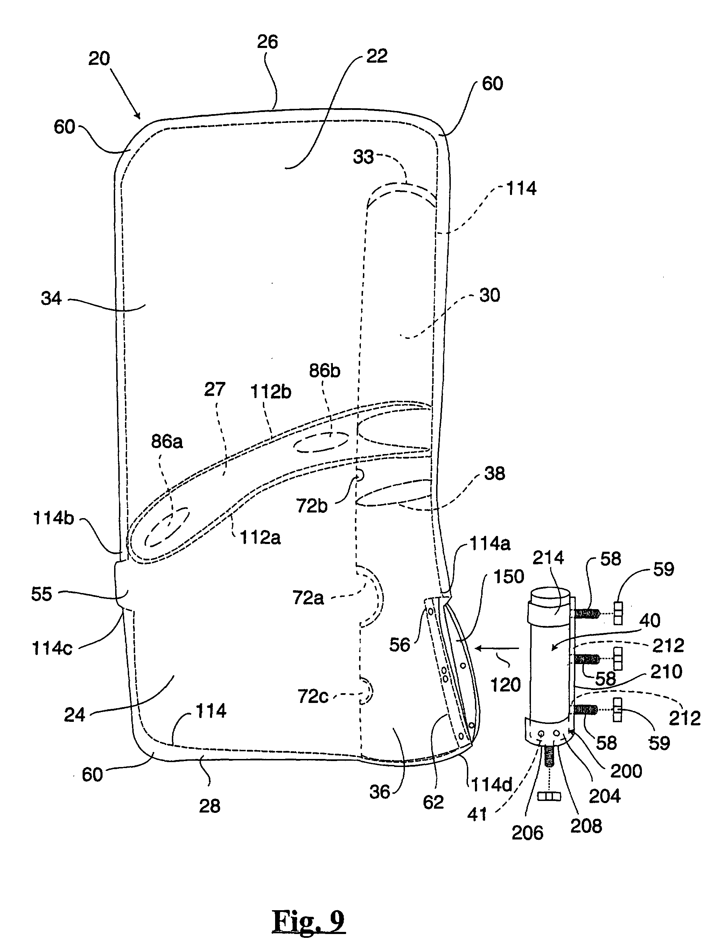

FIG. 9 shows an alternate embodiment of the invention. This embodiment is identical to that of FIG. 1 with the exception that the tube 30 is foreshortened. As can be seen the tube end 33 is closed (such as by sewing or inserting a patch of material). In this embodiment the upper chamber 22 extends rearwardly about the top of the tube.

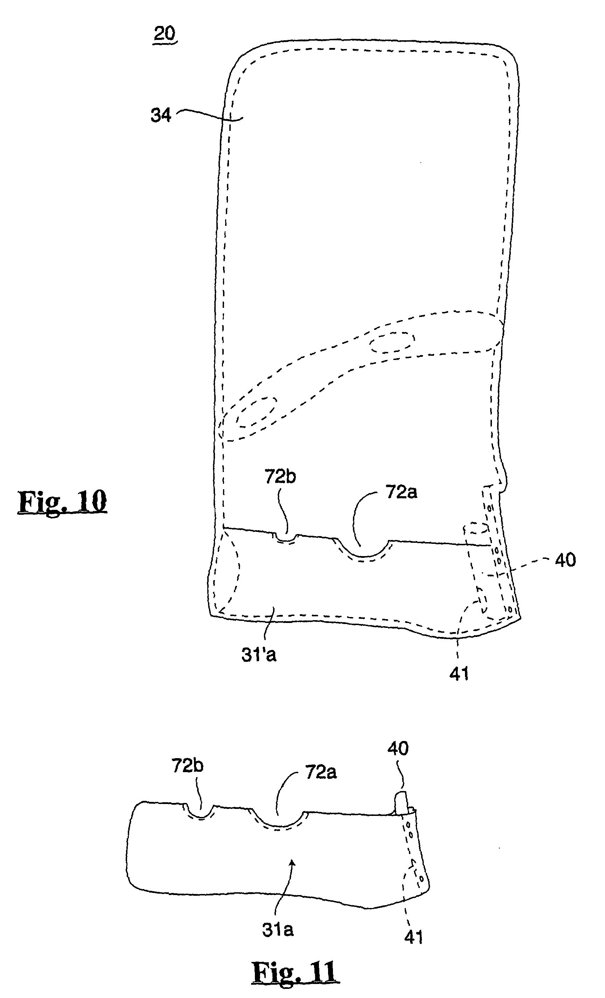

FIGS. 10 and 11 show a multi-chambered airbag 20 with a tube 31a positioned along a lower edge 28 of the lower chamber 24. FIG. 11 shows the tube 31a in isolation and also diagrammatically shows the inflator 40 in the right hand side of the tube 31a. As can be appreciated the exit port or ports 41 are located in the inflator 40 to direct gas into the tube 31a. The tube also includes ports or openings 72a, 72b through which inflation gas enters into the lower chamber 24.

It should be appreciated that the tube can be used with a single as well as multi-chambered airbag. The tube can be enclosed by common seam such as 114 as shown above or fabricated as a three-dimensional tube loosely inserted within the cushion and secured near the corners 62.

## Claims

1. A seat mounted side airbag (20) comprising:
an inflatable cushion (22,24) which upon inflation by inflation gas, is positioned between the vehicle occupant and an adjacent portion of a vehicle to protect the vehicle occupant, the cushion including front and rear sides (50a, 50b), a top (26) and bottom (28) ; where the airbag includes an inlet portion (120) **characterized in that**
an inflatable tube (30,31) positioned adjacent the inflatable cushion (22,24), adjacent to one of the bottom and rear side for extending at least a portion of the airbag along the dimension, prior to the full inflation of the cushion by inflation gas.

2. The side airbag (20) as defined in Claim 1 wherein the inflatable tube (30, 31) includes a flexible tube portion forming one of a rear panel and bottom of the cushion.

3. The side airbag (20) as defined in Claim 2 wherein the flexible tube portion extends substantially from the top (26) to the bottom rear of the airbag.

4. The side airbag (20) as defined in Claim 2 wherein an end (33) portion of the flexible tube portion is spaced from an adjacent portion of the airbag.

5. The side airbag (20) as defined in Claim 1 wherein the cushion (34) is divided into an inflatable upper chamber (22) and an inflatable lower chamber (24), the upper and lower chambers being in fluid communication wherein the inflatable tube (30, 31) supplies inflation gas to the lower chamber.

6. The side airbag (20) as defined in Claim 5 wherein the inflatable tube (30, 31) includes flow means for supplying inflation gas directly to the upper chamber.

7. The side airbag (20) as defined in Claim 5 wherein the upper and lower chambers (22, 24) are separated by a separator panel (27) having openings (86a, 86b) therein to allow'inflation gas to pass between the chambers.

## Patentansprüche

1. Sitzmontierter Seitenairbag (20), der aufweist:
ein aufblasbares Kissen (22, 24), das beim Aufblasen mittels Aufblasgas zwischen dem Fahrzeuginsassen und einem benachbarten Teil eines Fahrzeuges positioniert wird, um den Fahrzeuginsassen zu schützen, wobei das Kissen eine vordere und hintere Seite (50a, 50b), eine obere Seite (26) und eine untere Seite (28) aufweist, wobei der Airbag einen Eintrittsabschnitt (120) umfaßt; **dadurch gekennzeichnet, daß**
ein aufblasbarer Schlauch (30, 31) angrenzend an das aufblasbare Kissen (22, 24), angrenzend an eine von unterer und hinterer Seite für das Ausdehnen mindestens eines Abschnittes des Airbags längs der Dimension vor dem vollständigen Aufblasen des Kissens mittels des Aufblasgases positioniert wird.

2. Seitenairbag (20) nach Anspruch 1, bei dem der aufblasbare Schlauch (30, 31) einen elastischen Schlauchabschnitt umfaßt, der eine von einer hinteren Bahn und unteren Seite des Kissens bildet.

3. Seitenairbag (20) nach Anspruch 2, bei dem sich der elastische Schlauchabschnitt im wesentlichen von der oberen Seite (26) zur unteren hinteren Seite des Airbags erstreckt.

4. Seitenairbag (20) nach Anspruch 2, bei dem ein Endabschnitt (33) des elastischen Schlauchabschnittes von einem benachbarten Abschnitt des Airbags beabstandet ist.

5. Seitenairbag (20) nach Anspruch 1, bei dem das Kissen (34) in eine aufblasbare obere Kammer (22) und eine aufblasbare untere Kammer (24) unterteilt ist, wobei die obere und die untere Kammer in Fluidverbindung sind, worin der aufblasbare Schlauch (30, 31) Aufblasgas der unteren Kammer zuführt.

6. Seitenairbag (20) nach Anspruch 5, bei dem der aufblasbare Schlauch (30, 31) eine Strömungseinrichtung für das Zuführen von Aufblasgas direkt zur oberen Kammer umfaßt.

7. Seitenairbag (20) nach Anspruch 5, bei dem die obere und die untere Kammer (22, 24) durch eine Trennbahn (27) mit Öffnungen (86a, 86b) darin getrennt sind, um zu gestatten, daß Aufblasgas zwischen den Kammern strömt.

## Revendications

1. Coussin d'air latéral monté dans un siège (20), comprenant:
un coussin gonflable (22, 24) positionné lors du gonflement par le gaz de gonflement entre l'occupant du véhicule et une partie adjacente d'un véhicule pour protéger l'occupant du véhicule, le coussin englobant des côtés avant et arrière (50a, 50b), une partie supérieure (26) et une partie inférieure (28), le coussin d'air englobant une partie d'admission (120), **caractérisé par**:
un tube gonflable (30, 31) positionné près du coussin gonflable (22, 24), près de l'un des côtés inférieur et arrière, pour étendre au moins une partie du coussin d'air le long de la dimension, avant le gonflement complet du coussin par le gaz de gonflement.

2. Coussin d'air latéral (20) selon la revendication 1, dans lequel le tube gonflable (30, 31) englobe une partie de tube flexible formant un panneau arrière et la partie inférieure du coussin.

3. Coussin d'air latéral (20) selon la revendication 2, dans lequel la partie de tube flexible s'étend pratiquement à partir de la partie supérieure (26) vers la partie arrière inférieure du coussin d'air.

4. Coussin d'air latéral (20) selon la revendication 2, dans lequel une partie d'extrémité (33) de la partie de tube flexible est espacée d'une partie adjacente du coussin d'air.

5. Coussin d'air latéral (20) selon la revendication 1, dans lequel le coussin (34) est divisé en une chambre supérieure gonflable (22) et une chambre inférieure gonflable (24), les chambres supérieure et inférieure étant en communication de fluide, le tube gonflable (30, 31) fournissant du gaz de gonflement à la chambre inférieure.

6. Coussin d'air latéral (20) selon la revendication 5, dans lequel le tube gonflable (30, 31) englobe des moyens d'écoulement pour amener le gaz de gonflement directement vers la chambre supérieure.

7. Coussin d'air latéral (20) selon la revendication 5, dans lequel les chambres supérieure et inférieure (22, 24) sont séparées par un panneau de séparation (27) comportant des ouvertures (86a, 86b) pour permettre le passage du gaz de gonflement entre les chambres.
